# EUROPEAN PATENT APPLICATION

(11) **EP 4 679 797 A1**
(43) Date of publication of application: **14.01.2026**
(21) Application number: 25176676.2
(22) Date of filing: 15.05.2025
(51) Int. Cl.: H04L 45/24, H04L 67/14, H04L 67/141, H04L 67/563, H04L 69/14, H04W 28/02, H04W 76/10, H04W 76/20

(54) **HANDLING OF DATAGRAMS WITH UNKNOWN IDENTITIES**

(30) Priority: 12.07.2024 US 202418771619
(71) Applicant: Lenovo (Singapore) Pte. Ltd., New Tech Park 556741 (SG)
(72) Inventor: ATARIUS, Roozbeh, La Jolla, 92037 (US)
(74) Representative: Openshaw & Co.

(57) **Abstract**

Various aspects of the present disclosure provide mechanisms for handling datagrams, such as datagrams having unknown context IDs, by UEs and/or network entities of a 3GPP network that employ a multi-path QUIC (MPQUIC) functionality during packet data unit (PDU) sessions. For example, the 3GPP network, via a policy control function (PCF) of the network, may predetermine a transport mode for datagrams transmitted within a PDU session and communicate the transport mode to the UE and network entity that established the PDU session.

## Description

### TECHNICAL FIELD

The present disclosure relates to wireless communications, and more specifically to handling datagrams having unknown identities.

### BACKGROUND

A wireless communications system may include one or multiple network communication devices, such as base stations, which may support wireless communications for one or multiple user communication devices, which may be otherwise known as user equipment (UE), or other suitable terminology. The wireless communications system may support wireless communications with one or multiple user communication devices by utilizing resources of the wireless communication system (e.g., time resources (e.g., symbols, slots, subframes, frames, or the like) or frequency resources (e.g., subcarriers, carriers, or the like). Additionally, the wireless communications system may support wireless communications across various radio access technologies including third generation (3G) radio access technology, fourth generation (4G) radio access technology, fifth generation (5G) radio access technology, among other suitable radio access technologies beyond 5G (e.g., sixth generation (6G)).

Some wireless communication systems may support multi-path QUIC (MPQUIC) functionality, which is a higher layer steering functionality that enables steering, switching, and/or splitting of user datagram protocol (UDP) traffic between a UE and a user plane function (UPF) of a core network. Some standards organization, such as the 3rd Generation Partnership Project (3GPP) define such functionality via an Access Traffic Steering, Switching, Splitting (ATSSS) feature.

MPQUIC provides multiple transport modes for datagrams within UDP traffic or UDP flow. These transport modes include a first datagram mode (also referred to as "datagram mode 1") and a second datagram mode (also referred to as "datagram mode 2"), each datagram mode may define a payload for a datagram (e.g., a hypertext transport protocol (HTTP) datagram). In some cases, a multi-access (MA) protocol data unit (PDU) session may be established using MPPQUIC as a steering functionality. In these cases, if a transport mode for datagrams is the first datagram mode, the datagrams may have a context identifier (ID) that indicates a value for the first datagram mode (e.g., a value set to zero). Additionally, the datagrams may have a payload that includes a 32-bit integer sequence number that defines a transmission order for the datagram payload. Additionally, the datagrams may have a UDP payload containing a UDP packet to be transmitted. In other cases, if the transport mode is the second datagram mode, the datagrams may have a context ID that indicates a value for the second datagram mode (e.g., a non-zero integer). Additionally, the datagrams may have a UDP payload.

### SUMMARY

An article "a" before an element is unrestricted and understood to refer to "at least one" of those elements or "one or more" of those elements. The terms "a," "at least one," "one or more," and "at least one of one or more" may be interchangeable. As used herein, including in the claims, "or" as used in a list of items (e.g., a list of items prefaced by a phrase such as "at least one of" or "one or more of" or "one or both of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on. Further, as used herein, including in the claims, a "set" may include one or more elements.

The present disclosure relates to methods, apparatuses, and systems that support the handling of datagrams having unknown identities within a UDP flow for a service or application supported by a wireless communications system.

Some implementations of the method and apparatuses described herein may further include a network function for wireless communication, comprising at least one memory, and at least one processor coupled with the at least one memory and configured to cause the network function to establish a PDU session for a UE, wherein the PDU session comprises a UDP flow for a service or an application, receive a rule of a transport mode associated with the UDP flow, receive a datagram comprising an unknown identifier and a payload, and handle the payload of the received datagram according to the transport mode of the UDP flow.

In some implementations of the method and apparatuses described herein, the unknown identifier is an unknown context identifier that indicates a format of the payload.

In some implementations of the method and apparatuses described herein, the PDU session is a MA PDU session.

In some implementations of the method and apparatuses described herein, the UDP flow is a service data flow (SDF) and is steered across 3GPP-access and non-3GPP access as a multipath-enabled QUIC steering functionality.

In some implementations of the method and apparatuses described herein, a context identifier is allocated for the transport mode associated with the multipath-enabled QUIC steering functionality of the UDP flow.

In some implementations of the method and apparatuses described herein, the transport mode is datagram mode 1 or datagram mode 2.

In some implementations of the method and apparatuses described herein, the network function is a user plane function (UPF) and the least one processor is configured to cause the UPF to receive the rule of the transport mode associated with the UDP flow from a session management function (SMF).

In some implementations of the method and apparatuses described herein, to handle the datagram, the at least one processor is configured to cause the UPF to receive the datagram.

In some implementations of the method and apparatuses described herein, the datagram is a hypertext transport protocol (HTTP) datagram that is used as part of a format of a QUIC datagram frame.

In some implementations of the method and apparatuses described herein, the at least one processor is further configured to cause the network function to allocate a context identifier to the datagram based on the transport mode and receive other datagrams of the UDP flow for the service or application having context identifiers that are different than the context identifier allocated to the datagram.

Some implementations of the method and apparatuses described herein may further include a method performed by a network function, the method comprising establishing a PDU session for a UE, wherein the PDU session comprises a UDP flow for a service or an application, receiving a rule of a transport mode associated with the UDP flow, receiving a datagram comprising an unknown identifier and a payload, and handling the payload of the received datagram according to the transport mode of the UDP flow.

In some implementations of the method and apparatuses described herein, the unknown identifier is an unknown context identifier that indicates a format of the payload.

In some implementations of the method and apparatuses described herein, the UDP flow is an SDF and is steered across 3GPP-access and non-3GPP access as a multipath-enabled QUIC steering functionality.

In some implementations of the method and apparatuses described herein, the datagram is a HTTP datagram that is used as part of a format of a QUIC datagram frame.

In some implementations of the method and apparatuses described herein, the method further comprises allocating a context identifier to the datagram based on the transport mode and receiving other datagrams of the UDP flow for the service or application having context identifiers that are different than the context identifier allocated to the datagram.

Some implementations of the method and apparatuses described herein may further include a UE for wireless communication, comprising at least one memory and at least one processor coupled with the at least one memory and configured to cause the UE to establish a PDU session with a UPF for transmitting a UDP flow for a service or application, receive a rule of steering, switching, and splitting the UDP flow across 3GPP access and non 3GPP access as a QUIC steering functionality with a transport mode, wherein the transport mode is a datagram mode for the service or application received from an SMF, and transmit one or more datagrams of the UDP flow for the service or application using the QUIC steering functionality with the transport mode received as the rule from the SMF.

In some implementations of the method and apparatuses described herein, the PDU session is an MA PDU session where traffic is steered across 3GPP-access and non-3GPP access as a multipath-enabled QUIC steering functionality.

In some implementations of the method and apparatuses described herein, the one or more datagrams include unknown context IDs and wherein the at least one processor is further configured to cause the UE to handle payloads of the one or more datagrams regardless of the unknown context IDs.

Some implementations of the method and apparatuses described herein may further include a processor for wireless communication, comprising at least one controller coupled with at least one memory and configured to cause the processor to establish a PDU session with a UPF for transmitting a UDP flow for a service or application, receive a rule of steering, switching, and splitting the UDP flow across 3GPP access and non 3GPP access as a QUIC steering functionality with a transport mode, wherein the transport mode is a datagram mode for the service or application received from an SMF, and transmit the UDP flow for the service or application using the QUIC steering functionality with the transport mode received as the rule from the SMF.

In some implementations of the method and apparatuses described herein, the PDU session is a multiple access (MA) PDU session where traffic is steered across 3GPP-access and non-3GPP access as a multipath-enabled QUIC steering functionality.

### BRIEF DESCRIPTION OF THE DRAWINGS

Figure 1 illustrates an example of a wireless communications system in accordance with aspects of the present disclosure.
Figure 2 illustrates an example diagram of a datagram in accordance with aspects of the present disclosure.
Figure 3 illustrates an example diagram that depicts a call flow procedure in accordance with aspects of the present disclosure.
Figure 4 illustrates an example of a user equipment (UE) in accordance with aspects of the present disclosure.
Figure 5 illustrates an example of a processor in accordance with aspects of the present disclosure.
Figure 6 illustrates an example of a network equipment (NE) in accordance with aspects of the present disclosure.
Figure 7 illustrates a flowchart of a method performed by an NE in accordance with aspects of the present disclosure.
Figure 8 illustrates a flowchart of a method performed by a UE in accordance with aspects of the present disclosure.

### DETAILED DESCRIPTION

Some wireless communication systems might not support a mechanism (e.g., functionality, configuration, parameters) for handling datagrams having an unknown context ID during a PDU session. As a result, these datagrams may be dropped (e.g., discarded) or otherwise may be obsolete (e.g., not used) during the PDU session, which can lead to inefficient performance for one or more nodes (e.g., UEs, base stations, network entities of a core network) and/or low quality of service (QoS) for one or more services or applications supported by the one or more nodes (e.g., UEs, base stations, network entities of a core network).

Various aspects of the present disclosure relate to handling (e.g., processing, managing, receiving, transmitting) of datagrams, particularly by a wireless communication system, including one or more nodes (e.g., UEs, base stations, network entities of a core network) that support MPQUIC functionality as a steering functionality for various services, applications, etc. For example, a policy control function (PCF) of the wireless communication system may determine a transport mode for datagrams associated with a PDU session and communicate (e.g., transmit, output) the determined transport mode to the one or more nodes (e.g., UEs, base stations, network entities, such as a user plane function (UPF) that established the PDU session). Because the determined transport mode is known (e.g., indicated, signaled) to the UEs, base stations UE, network entities, such as the UPF, datagrams irrespective of the values of their context IDs (e.g., whether identified or unknown), can be handled (e.g., processed, received, buffered, utilized) during the PDU session.

The network (e.g., base stations, network entities of a core network) may implicitly register all or any chosen values of the context ID of datagrams for the transport mode of the PDU session. In doing so, the network may handle (e.g., buffer, receive, not drop) datagrams having an unknown context ID received for a UDP flow. Additionally, the network (e.g., base stations, network entities of a core network) may assign the same context ID for datagrams transmitted by a node (e.g., a UE or the UPF) within a UDP flow (e.g., an SDF). Additionally, the network (e.g., base stations, network entities of a core network) may maintain a value of the context ID within a UDP flow. The network, therefore, may enhance its efficiency and/or QoS by handling datagrams during a PDU session regardless of the context IDs of the datagrams, among other benefits.

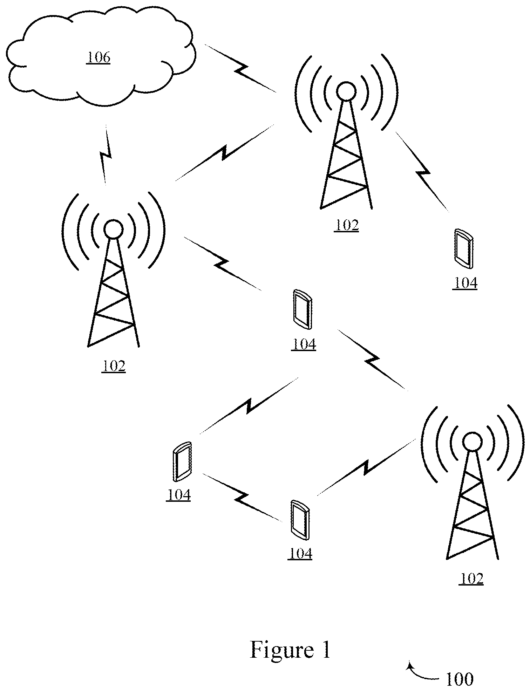

Figure 1 illustrates an example of a wireless communications system 100 in accordance with aspects of the present disclosure. The wireless communications system 100 may include one or more NE 102, one or more UE 104, and a core network (CN) 106. The wireless communications system 100 may support various radio access technologies. In some implementations, the wireless communications system 100 may be a 4G network, such as an LTE network or an LTE-Advanced (LTE-A) network. In some other implementations, the wireless communications system 100 may be a NR network, such as a 5G network, a 5G-Advanced (5G-A) network, or a 5G ultrawideband (5G-UWB) network. In other implementations, the wireless communications system 100 may be a combination of a 4G network and a 5G network, or other suitable radio access technology including Institute of Electrical and Electronics Engineers (IEEE) 802.11 (Wi-Fi), IEEE 802.16 (WiMAX), IEEE 802.20. The wireless communications system 100 may support radio access technologies beyond 5G, for example, 6G. Additionally, the wireless communications system 100 may support technologies, such as time division multiple access (TDMA), frequency division multiple access (FDMA), or code division multiple access (CDMA), etc.

The one or more NE 102 may be dispersed throughout a geographic region to form the wireless communications system 100. One or more of the NE 102 described herein may be or include or may be referred to as a network node, a base station, a network element, a network function, a network entity, a radio access network (RAN), a NodeB, an eNodeB (eNB), a next-generation NodeB (gNB), or other suitable terminology. An NE 102 and a UE 104 may communicate via a communication link, which may be a wireless or wired connection. For example, an NE 102 and a UE 104 may perform wireless communication (e.g., receive signaling, transmit signaling) over a Uu interface.

An NE 102 may provide a geographic coverage area for which the NE 102 may support services for one or more UEs 104 within the geographic coverage area. For example, an NE 102 and a UE 104 may support wireless communication of signals related to services (e.g., voice, video, packet data, messaging, broadcast, etc.) according to one or multiple radio access technologies. In some implementations, an NE 102 may be moveable, for example, a satellite associated with a non-terrestrial network (NTN). In some implementations, different geographic coverage areas associated with the same or different radio access technologies may overlap, but the different geographic coverage areas may be associated with different NE 102.

The one or more UE 104 may be dispersed throughout a geographic region of the wireless communications system 100. A UE 104 may include or may be referred to as a remote unit, a mobile device, a wireless device, a remote device, a subscriber device, a transmitter device, a receiver device, or some other suitable terminology. In some implementations, the UE 104 may be referred to as a unit, a station, a terminal, or a client, among other examples. Additionally, or alternatively, the UE 104 may be referred to as an Internet-of-Things (IoT) device, an Internet-of-Everything (IoE) device, or machine-type communication (MTC) device, among other examples.

A UE 104 may be able to support wireless communication directly with other UEs 104 over a communication link. For example, a UE 104 may support wireless communication directly with another UE 104 over a device-to-device (D2D) communication link. In some implementations, such as vehicle-to-vehicle (V2V) deployments, vehicle-to-everything (V2X) deployments, or cellular-V2X deployments, the communication link may be referred to as a sidelink. For example, a UE 104 may support wireless communication directly with another UE 104 over a PC5 interface.

An NE 102 may support communications with the CN 106, or with another NE 102, or both. For example, an NE 102 may interface with other NE 102 or the CN 106 through one or more backhaul links (e.g., S1, N2, N2, or network interface). In some implementations, the NE 102 may communicate with each other directly. In some other implementations, the NE 102 may communicate with each other or indirectly (e.g., via the CN 106. In some implementations, one or more NE 102 may include subcomponents, such as an access network entity, which may be an example of an access node controller (ANC). An ANC may communicate with the one or more UEs 104 through one or more other access network transmission entities, which may be referred to as a radio heads, smart radio heads, or transmission-reception points (TRPs).

The CN 106 may support user authentication, access authorization, tracking, connectivity, and other access, routing, or mobility functions. The CN 106 may be an evolved packet core (EPC), or a 5G core (5GC), which may include a control plane entity that manages access and mobility (e.g., a mobility management entity (MME), an access and mobility management functions (AMF)) and a user plane entity that routes packets or interconnects to external networks (e.g., a serving gateway (S-GW), a Packet Data Network (PDN) gateway (P-GW), or a user plane function (UPF)). In some implementations, the control plane entity may manage non-access stratum (NAS) functions, such as mobility, authentication, and bearer management (e.g., data bearers, signal bearers, etc.) for the one or more UEs 104 served by the one or more NE 102 associated with the CN 106.

The CN 106 may communicate with a packet data network over one or more backhaul links (e.g., via an S1, N2, N2, or another network interface). The packet data network may include an application server. In some implementations, one or more UEs 104 may communicate with the application server. A UE 104 may establish a session (e.g., a protocol data unit (PDU) session, or the like) with the CN 106 via an NE 102. The CN 106 may route traffic (e.g., control information, data, and the like) between the UE 104 and the application server using the established session (e.g., the established PDU session). The PDU session may be an example of a logical connection between the UE 104 and the CN 106 (e.g., one or more network functions of the CN 106).

In the wireless communications system 100, the NEs 102 and the UEs 104 may use resources of the wireless communications system 100 (e.g., time resources (e.g., symbols, slots, subframes, frames, or the like) or frequency resources (e.g., subcarriers, carriers)) to perform various operations (e.g., wireless communications). In some implementations, the NEs 102 and the UEs 104 may support different resource structures. For example, the NEs 102 and the UEs 104 may support different frame structures. In some implementations, such as in 4G, the NEs 102 and the UEs 104 may support a single frame structure. In some other implementations, such as in 5G and among other suitable radio access technologies, the NEs 102 and the UEs 104 may support various frame structures (i.e., multiple frame structures). The NEs 102 and the UEs 104 may support various frame structures based on one or more numerologies.

One or more numerologies may be supported in the wireless communications system 100, and a numerology may include a subcarrier spacing and a cyclic prefix. A first numerology (e.g., *µ*=0) may be associated with a first subcarrier spacing (e.g., 15 kHz) and a normal cyclic prefix. In some implementations, the first numerology (e.g., *µ*=0) associated with the first subcarrier spacing (e.g., 15 kHz) may utilize one slot per subframe. A second numerology (e.g., *µ*=1) may be associated with a second subcarrier spacing (e.g., 30 kHz) and a normal cyclic prefix. A third numerology (e.g., *µ*=2) may be associated with a third subcarrier spacing (e.g., 60 kHz) and a normal cyclic prefix or an extended cyclic prefix. A fourth numerology (e.g., *µ*=3) may be associated with a fourth subcarrier spacing (e.g., 120 kHz) and a normal cyclic prefix. A fifth numerology (e.g., *µ*=4) may be associated with a fifth subcarrier spacing (e.g., 240 kHz) and a normal cyclic prefix.

A time interval of a resource (e.g., a communication resource) may be organized according to frames (also referred to as radio frames). Each frame may have a duration, for example, a 10 millisecond (ms) duration. In some implementations, each frame may include multiple subframes. For example, each frame may include 10 subframes, and each subframe may have a duration, for example, a 1 ms duration. In some implementations, each frame may have the same duration. In some implementations, each subframe of a frame may have the same duration.

Additionally or alternatively, a time interval of a resource (e.g., a communication resource) may be organized according to slots. For example, a subframe may include a number (e.g., quantity) of slots. The number of slots in each subframe may also depend on the one or more numerologies supported in the wireless communications system 100. For instance, the first, second, third, fourth, and fifth numerologies (i.e., *µ*=0, *µ*=1, *µ*=2, *µ*=3, *µ*=4) associated with respective subcarrier spacings of 15 kHz, 30 kHz, 60 kHz, 120 kHz, and 240 kHz may utilize a single slot per subframe, two slots per subframe, four slots per subframe, eight slots per subframe, and 16 slots per subframe, respectively. Each slot may include a number (e.g., quantity) of symbols (e.g., OFDM symbols). In some implementations, the number (e.g., quantity) of slots for a subframe may depend on a numerology. For a normal cyclic prefix, a slot may include 14 symbols. For an extended cyclic prefix (e.g., applicable for 60 kHz subcarrier spacing), a slot may include 12 symbols. The relationship between the number of symbols per slot, the number of slots per subframe, and the number of slots per frame for a normal cyclic prefix and an extended cyclic prefix may depend on a numerology. It should be understood that reference to a first numerology (e.g., *µ*=0) associated with a first subcarrier spacing (e.g., 15 kHz) may be used interchangeably between subframes and slots.

In the wireless communications system 100, an electromagnetic (EM) spectrum may be split, based on frequency or wavelength, into various classes, frequency bands, frequency channels, etc. By way of example, the wireless communications system 100 may support one or multiple operating frequency bands, such as frequency range designations FR1 (410 MHz - 7.125 GHz), FR2 (24.25 GHz - 52.6 GHz), FR3 (7.125 GHz - 24.25 GHz), FR4 (52.6 GHz - 114.25 GHz), FR4a or FR4-1 (52.6 GHz - 71 GHz), and FR5 (114.25 GHz - 300 GHz). In some implementations, the NEs 102 and the UEs 104 may perform wireless communications over one or more of the operating frequency bands. In some implementations, FR1 may be used by the NEs 102 and the UEs 104, among other equipment or devices for cellular communications traffic (e.g., control information, data). In some implementations, FR2 may be used by the NEs 102 and the UEs 104, among other equipment or devices for short-range, high data rate capabilities.

FR1 may be associated with one or multiple numerologies (e.g., at least three numerologies). For example, FR1 may be associated with a first numerology (e.g., *µ*=0), which includes 15 kHz subcarrier spacing; a second numerology (e.g., *µ*=1), which includes 30 kHz subcarrier spacing; and a third numerology (e.g., *µ*=2), which includes 60 kHz subcarrier spacing. FR2 may be associated with one or multiple numerologies (e.g., at least 2 numerologies). For example, FR2 may be associated with a third numerology (e.g., *µ*=2), which includes 60 kHz subcarrier spacing; and a fourth numerology (e.g., *µ*=3), which includes 120 kHz subcarrier spacing.

As described herein, the wireless communications system 100 may employ a mechanism for handling datagrams during PDU sessions (e.g., UDP flows) that implicitly registers the datagrams to the UDP flows, regardless of context ID values for the datagrams.

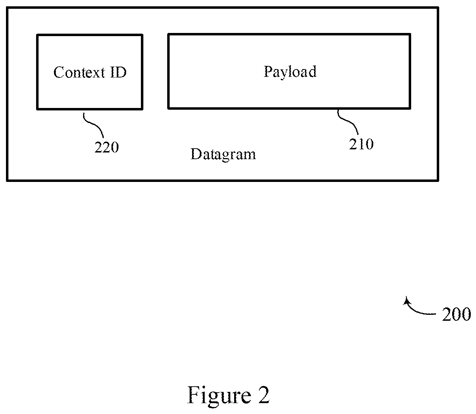

Figure 2 illustrates an example diagram of a datagram 200 in accordance with aspects of the present disclosure. The datagram 200, which may be an HTTP datagram (e.g., an HTTP datagram that is used as part of a format of a QUIC datagram frame), includes a payload 210 and a context ID 220. The payload 210 may be a UDP payload containing a UDP packet for transmission, and, depending on the transport mode, may include a 32-bit integer sequence number that defines a transmission order for the datagram payload (e.g., for a datagram mode 1).

The context ID 220 includes a value that is dependent on the transport mode of an associated service or application and provides a semantic or format for the payload 210. For example, when the transport mode is a datagram mode 2, the value is set to zero, and when the transport mode is datagram mode 1, the value is set to a non-zero integer. In some cases, the context ID 220 (e.g., the value) is unknown to the network (e.g., an unknown identifier).

In some cases, one or more nodes (e.g., UEs, base stations, network entities of a core network) associated with a UDP flow and/or PDU session, such as a UE and a UPF may obtain transport mode information associated with MPQUIC steering functionality for transmission of the UDP flow (e.g., for a specific service/application) across 3GPP access and non-3GPP access, from ATSSS rules and N4 rules received from an SMF. The SMF may receive policy and charging control (PCC) rules for a PCF and convert (e.g., map, associate) the received PCC rules to the ATSSS rules and the N4 rules. In some cases, the steering functionality and the associated transport mode are explicitly used by the UE and the UPF.

When the steering functionality includes or employs an MPQUIC functionality, the associated transport mode for a service/application is determined by a PCF and communicated to the UE and the UPF via the SMF, regardless or independent of any context ID values within transmitted datagrams. The network, therefore, provides the UE and the UPF with the transport mode information before handling any datagrams during a UPD flow for a service/application, implicitly registering all datagrams (e.g., datagrams having same or different context IDs) to the UDP flow for the service/application (e.g., an SDF). As described herein, in some cases, the UE and the UPF can handle (e.g., receive, buffer, process) and not discard (e.g., drop) datagrams, even when the context IDs for the datagrams are unknown to the UE and the UPF, or other handling peer nodes.

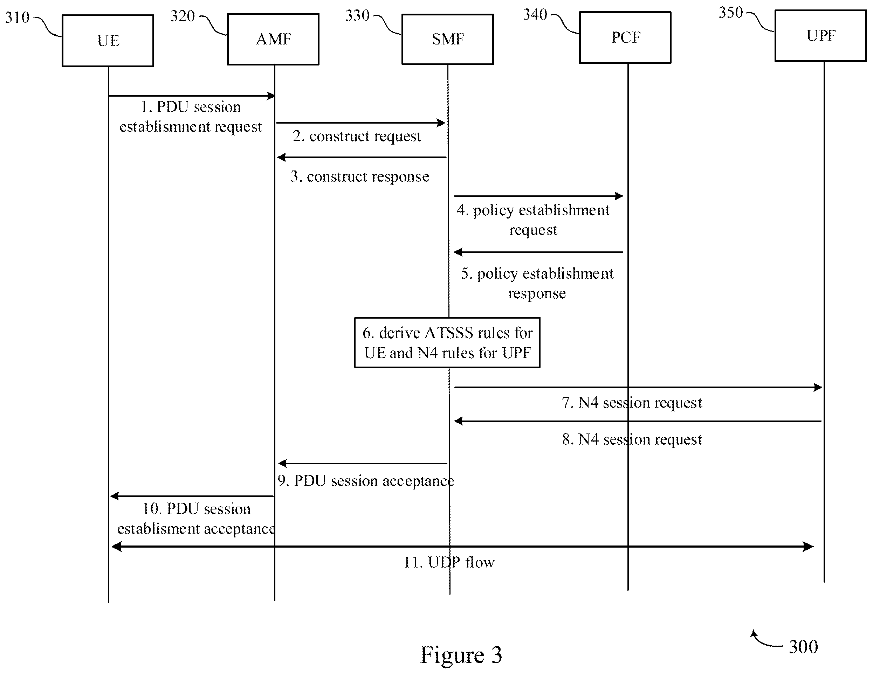

Figure 3 illustrates an example diagram of a call flow procedure 300 in accordance with aspects of the present disclosure. The call flow procedure 300 may implement various aspects of the present disclosure described herein. For example, the call flow procedure 300 may include a UE 310, an AMF 320, an SMF 330, a PCF 340, and a UPF 350, which may be examples of UEs, AMFs, SMFs, PCFs, and UPFs as described herein. In the following description of the call flow procedure 300, the operations between the UE 310, the AMF 320, the SMF 330, the PCF 340, and/or the UPF 350 may be performed in different orders or at different times. Some operations may also be omitted, or other operations may be added. Although the UE 310, the AMF 320, the SMF 330, the PCF 340, and/or the UPF 350 are shown perform the operations of the call flow procedure 300, some aspects of some operations may also be performed by other entities of the call flow procedure 300 or by entities that re not shown in the call flow procedure 300, or any combination thereof.

In step 1, the UE 310 may output (e.g., transmit), to the AMF 320, a PDU session establishment request. The PDU session establishment request may trigger a PDU session establishment procedure. For example, the UE 310 may output, to the AMF 320, the PDU session establishment request within a non-access stratum (NAS) message for the PDU session establishment procedure. Alternatively, the UE 310 may transmit, to the AMF 320 via a base station (not shown), the PDU session establishment request. The PDU session establishment request may include one or more information elements (IEs) within a NAS message. The PDU session establishment procedure may be for establishing a MA PDU session.

In step 2, the AMF 320 may generate and transmit, to the SMF 330, a request message. The request message may be a NAS request message (e.g., Nsmf_PDUSession_CreateSMContext request), which may include one or more IEs for requesting session management (SM) context from the SMF 330. In step 3, the SMF 330 may generate and transmit, to the AMF 320, a NAS response message (e.g., Nsmf_PDUSession_CreateSMContext response), which may include an SM context ID.

In step 4, the SMF 330 may transmit, to the PCF 340, a request message to establish an SM policy association. The request message (e.g., Npcf_SMPolicyControl_Create message) may include information associated with a PDU session for the UE 310.

In step 5, the PCF 340 may transmit, to the SMF 330, a response message (e.g., Npcf_SMPolicyControl_Create response) that indicates the SMF policy association.

In step 6, the SMF 330 may determine (e.g., identify, derive) ATSSS rules for the UE 310. For example, the SMF 330 may determine (e.g., identify, derive) ATSSS rules for the UE 310 according to PCC rules. The ATSSS rules may be provided (e.g., transmitted, outputted) to the UE 310 for controlling traffic steering, switching, and splitting of uplink communication (e.g., packets, PDUs). Additionally, the SMF 330 may determine (e.g., identify, derive) N4 rules for the UPF 350. For example, the SMF 330 may determine (e.g., identify, derive) N4 rules for the UPF 350 according to PCC rules. The N4 rules may be provided (e.g., transmitted, outputted) to the UPF 350 for controlling the traffic steering, switching, and splitting downlink communication (e.g., packets, PDUs).

In step 7, the SMF 330 may transmit, to the UPF 350, an N4 session request message, which may initiate an N4 session establishment procedure with the UPF 350. The N4 session request message may include or indicate the N4 rules (e.g., determined by the SMF 330) for a MA PDU session. In response to the N4 session request message, the UPF 350 may activate (e.g., enable) an MPQUIC functionality for the MA PDU session. In some cases, the UPF 350 may activate the MPQUIC functionality for the MA PDU session based at least in part on the N4 rules (e.g., determined by the SMF 330) for the MA PDU session.

In step 8, the UPF 350 may transmit, to the SMF 330, an N4 session response message. The N4 session response message may include or indicate MPQUIC link-specific multipath addresses/prefixes, MPQUIC proxy information, or both. For example, the UPF 350 may allocate (e.g., assign) UE MPQUIC link-specific multipath addresses/prefixes and indicate the MPQUIC link-specific multipath addresses/prefixes and/or MPQUIC proxy information to the SMF 330.

In step 9, the SMF 330 may transmit, to the AMF 320, a PDU session acceptance message. The SMF 3320 may include an MA PDU session accepted indication in a Namf_Communication_N1N2MessageTransfer message, which may indicate to the AMF 320 that N2 SM information included in the message is to be transmitted (e.g., forwarded) to the UE 310. The AMF 320 may classify (e.g., mark, register) the PDU session as a MA PDU session based on the received MA PDU session accepted indication.

In step 10, the AMF 320 may transmit, and the UE 310 may receive (e.g., directly or via a base station (not shown)), a PDU session establishment accept message, which indicates to the UE 310 that the requested MA PDU session was successfully established. Additionally, the message may include or indicate the ATSSS rules for the MA PDU session (e.g., derived by the SMF 330), the MPQUIC link-specific multipath addresses/prefixes of the UE 310 and the MPQUIC proxy information.

In step 11, the UDP flow is established between one or more of the UE 310, the AMF 320, the SMF 330, the PCF 340, and/or the UPF 350. For example, uplink and downlink data is established for the MA PDU session, with UDP packets being transmitting between the UE 310, the AMF 320, the SMF 330, the PCF 340, and/or the UPF 350. The UE 310 may use the ATSSS rules for MPQUIC steering functionality and the associated transport mode, which is identified by the context ID.

As described herein (and according to 3GPP TS 24.501), if the transport mode is a datagram mode 2, then the UE 310 may set the context ID to zero, otherwise, the UE 310 uses a non-zero context ID (in accordance with IETF RFC 9298). In such a case, the context ID is an even-numbered value, since the UE 310 is considered to be a client. To transmit the UDP flow for the same SDF, the UPF 350 can either use a non-zero, odd-numbered, value for the context ID (in accordance with IETF RFC 9298) acting as a proxy.

Thus, the UE 310 or the UPF 350 may consider any chosen value for the context ID as being implicitly or previously registered for the transport mode. Further, when the value for the context ID is registered, the same context ID can be used by the UE 310 and the UPF 350 for the same UDP flow (e.g., SDF), in accordance with IETF RFC 9298, and does not have to be the odd or even values, as the transport mode is implicitly registered.

In addition, during a lifetime of the UDP flow for the service/application (e.g., SDF), the UE 310 and the UPF 350 may use the same value for the context ID for different datagrams within that SDF. However, if a new and unknown value for the context ID (e.g., for a new datagram) is received for the UDP flow during the lifetime of the UDP flow for the service/application, the UE 310 and the UPF 350 may consider (e.g., identify) the unknown context ID (e.g., unknown identifier for the datagram) as being registered for that UDP flow, and handle the datagram accordingly (e.g., buffer or receive the datagram).

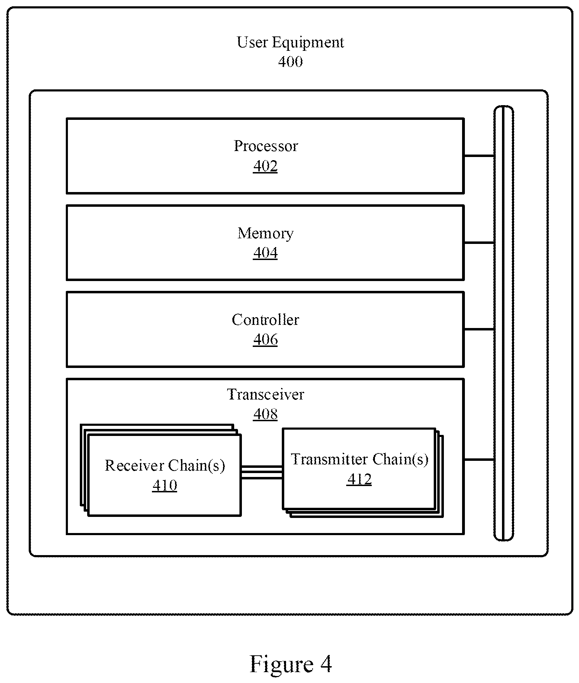

Figure 4 illustrates an example of a UE 400 in accordance with aspects of the present disclosure. The UE 400 may include a processor 402, a memory 404, a controller 406, and a transceiver 408. The processor 402, the memory 404, the controller 406, or the transceiver 408, or various combinations thereof or various components thereof may be examples of means for performing various aspects of the present disclosure as described herein. These components may be coupled (e.g., operatively, communicatively, functionally, electronically, electrically) via one or more interfaces.

The processor 402, the memory 404, the controller 406, or the transceiver 408, or various combinations or components thereof may be implemented in hardware (e.g., circuitry). The hardware may include a processor, a digital signal processor (DSP), an application-specific integrated circuit (ASIC), or other programmable logic device, or any combination thereof configured as or otherwise supporting a means for performing the functions described in the present disclosure.

The processor 402 may include an intelligent hardware device (e.g., a general-purpose processor, a DSP, a CPU, an ASIC, an FPGA, or any combination thereof). In some implementations, the processor 402 may be configured to operate the memory 404. In some other implementations, the memory 404 may be integrated into the processor 402. The processor 402 may be configured to execute computer-readable instructions stored in the memory 404 to cause the UE 400 to perform various functions of the present disclosure.

The memory 404 may include volatile or non-volatile memory. The memory 404 may store computer-readable, computer-executable code including instructions when executed by the processor 402 cause the UE 400 to perform various functions described herein. The code may be stored in a non-transitory computer-readable medium such the memory 404 or another type of memory. Computer-readable media includes both non-transitory computer storage media and communication media including any medium that facilitates transfer of a computer program from one place to another. A non-transitory storage medium may be any available medium that may be accessed by a general-purpose or special-purpose computer.

In some implementations, the processor 402 and the memory 404 coupled with the processor 402 may be configured to cause the UE 400 to perform one or more of the functions described herein (e.g., executing, by the processor 402, instructions stored in the memory 404). For example, the processor 402 may support wireless communication at the UE 400 in accordance with examples as disclosed herein. The UE 400 may be configured to support a means for establishing a PDU session with a UPF for transmitting a UDP flow for a service or application, receiving a rule of steering, switching, and splitting the UDP flow across 3GPP access and non 3GPP access as a QUIC steering functionality with a transport mode, wherein the transport mode is a datagram mode for the service or application received from an SMF, and transmitting one or more datagrams of the UDP flow for the service or application using the QUIC steering functionality with the transport mode received as the rule from the SMF.

The controller 406 may manage input and output signals for the UE 400. The controller 406 may also manage peripherals not integrated into the UE 400. In some implementations, the controller 406 may utilize an operating system such as iOS^{®}, ANDROID^{®}, WINDOWS^{®}, or other operating systems. In some implementations, the controller 406 may be implemented as part of the processor 402.

In some implementations, the UE 400 may include at least one transceiver 408. In some other implementations, the UE 400 may have more than one transceiver 408. The transceiver 408 may represent a wireless transceiver. The transceiver 408 may include one or more receiver chains 410, one or more transmitter chains 412, or a combination thereof.

A receiver chain 410 may be configured to receive signals (e.g., control information, data, packets) over a wireless medium. For example, the receiver chain 410 may include one or more antennas for receive the signal over the air or wireless medium. The receiver chain 410 may include at least one amplifier (e.g., a low-noise amplifier (LNA)) configured to amplify the received signal. The receiver chain 410 may include at least one demodulator configured to demodulate the receive signal and obtain the transmitted data by reversing the modulation technique applied during transmission of the signal. The receiver chain 410 may include at least one decoder for decoding the processing the demodulated signal to receive the transmitted data.

A transmitter chain 412 may be configured to generate and transmit signals (e.g., control information, data, packets). The transmitter chain 412 may include at least one modulator for modulating data onto a carrier signal, preparing the signal for transmission over a wireless medium. The at least one modulator may be configured to support one or more techniques such as amplitude modulation (AM), frequency modulation (FM), or digital modulation schemes like phase-shift keying (PSK) or quadrature amplitude modulation (QAM). The transmitter chain 412 may also include at least one power amplifier configured to amplify the modulated signal to an appropriate power level suitable for transmission over the wireless medium. The transmitter chain 412 may also include one or more antennas for transmitting the amplified signal into the air or wireless medium.

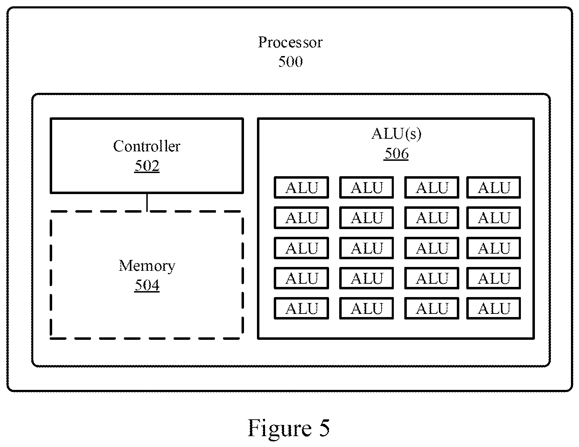

Figure 5 illustrates an example of a processor 500 in accordance with aspects of the present disclosure. The processor 500 may be an example of a processor configured to perform various operations in accordance with examples as described herein. The processor 500 may include a controller 502 configured to perform various operations in accordance with examples as described herein. The processor 500 may optionally include at least one memory 504, which may be, for example, an L1/L2/L3 cache. Additionally, or alternatively, the processor 500 may optionally include one or more arithmetic-logic units (ALUs) 506. One or more of these components may be in electronic communication or otherwise coupled (e.g., operatively, communicatively, functionally, electronically, electrically) via one or more interfaces (e.g., buses).

The processor 500 may be a processor chipset and include a protocol stack (e.g., a software stack) executed by the processor chipset to perform various operations (e.g., receiving, obtaining, retrieving, transmitting, outputting, forwarding, storing, determining, identifying, accessing, writing, reading) in accordance with examples as described herein. The processor chipset may include one or more cores, one or more caches (e.g., memory local to or included in the processor chipset (e.g., the processor 500) or other memory (e.g., random access memory (RAM), read-only memory (ROM), dynamic RAM (DRAM), synchronous dynamic RAM (SDRAM), static RAM (SRAM), ferroelectric RAM (FeRAM), magnetic RAM (MRAM), resistive RAM (RRAM), flash memory, phase change memory (PCM), and others).

The controller 502 may be configured to manage and coordinate various operations (e.g., signaling, receiving, obtaining, retrieving, transmitting, outputting, forwarding, storing, determining, identifying, accessing, writing, reading) of the processor 500 to cause the processor 500 to support various operations in accordance with examples as described herein. For example, the controller 502 may operate as a control unit of the processor 500, generating control signals that manage the operation of various components of the processor 500. These control signals include enabling or disabling functional units, selecting data paths, initiating memory access, and coordinating timing of operations.

The controller 502 may be configured to fetch (e.g., obtain, retrieve, receive) instructions from the memory 504 and determine subsequent instruction(s) to be executed to cause the processor 500 to support various operations in accordance with examples as described herein. The controller 502 may be configured to track memory address of instructions associated with the memory 504. The controller 502 may be configured to decode instructions to determine the operation to be performed and the operands involved. For example, the controller 502 may be configured to interpret the instruction and determine control signals to be output to other components of the processor 500 to cause the processor 500 to support various operations in accordance with examples as described herein. Additionally, or alternatively, the controller 502 may be configured to manage flow of data within the processor 500. The controller 502 may be configured to control transfer of data between registers, arithmetic logic units (ALUs), and other functional units of the processor 500.

The memory 504 may include one or more caches (e.g., memory local to or included in the processor 500 or other memory, such RAM, ROM, DRAM, SDRAM, SRAM, MRAM, flash memory, etc. In some implementations, the memory 504 may reside within or on a processor chipset (e.g., local to the processor 500). In some other implementations, the memory 504 may reside external to the processor chipset (e.g., remote to the processor 500).

The memory 504 may store computer-readable, computer-executable code including instructions that, when executed by the processor 500, cause the processor 500 to perform various functions described herein. The code may be stored in a non-transitory computer-readable medium such as system memory or another type of memory. The controller 502 and/or the processor 500 may be configured to execute computer-readable instructions stored in the memory 504 to cause the processor 500 to perform various functions. For example, the processor 500 and/or the controller 502 may be coupled with or to the memory 504, the processor 500, the controller 502, and the memory 504 may be configured to perform various functions described herein. In some examples, the processor 500 may include multiple processors and the memory 504 may include multiple memories. One or more of the multiple processors may be coupled with one or more of the multiple memories, which may, individually or collectively, be configured to perform various functions herein.

The one or more ALUs 506 may be configured to support various operations in accordance with examples as described herein. In some implementations, the one or more ALUs 506 may reside within or on a processor chipset (e.g., the processor 500). In some other implementations, the one or more ALUs 506 may reside external to the processor chipset (e.g., the processor 500). One or more ALUs 506 may perform one or more computations such as addition, subtraction, multiplication, and division on data. For example, one or more ALUs 506 may receive input operands and an operation code, which determines an operation to be executed. One or more ALUs 506 be configured with a variety of logical and arithmetic circuits, including adders, subtractors, shifters, and logic gates, to process and manipulate the data according to the operation. Additionally, or alternatively, the one or more ALUs 506 may support logical operations such as AND, OR, exclusive-OR (XOR), not-OR (NOR), and not-AND (NAND), enabling the one or more ALUs 506 to handle conditional operations, comparisons, and bitwise operations.

The processor 500 may support wireless communication in accordance with examples as disclosed herein. For example, the processor 500 may be configured to or operable to support a means for establishing a PDU session with a UPF for transmitting a UDP flow for a service or application, receiving a rule of steering, switching, and splitting the UDP flow across 3GPP access and non 3GPP access as a QUIC steering functionality with a transport mode, wherein the transport mode is a datagram mode for the service or application received from an SMF, and transmitting one or more datagrams of the UDP flow for the service or application using the QUIC steering functionality with the transport mode received as the rule from the SMF.

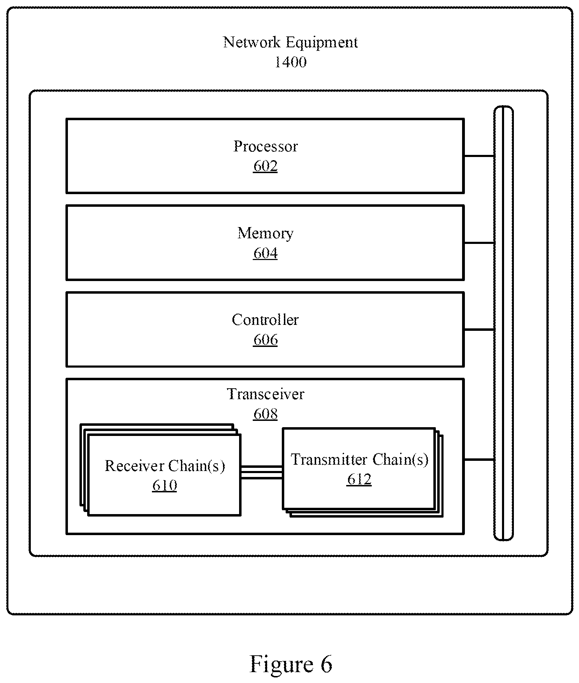

Figure 6 illustrates an example of a NE 600 in accordance with aspects of the present disclosure. The NE 600 may include a processor 602, a memory 604, a controller 606, and a transceiver 608. The processor 602, the memory 604, the controller 606, or the transceiver 608, or various combinations thereof or various components thereof may be examples of means for performing various aspects of the present disclosure as described herein. These components may be coupled (e.g., operatively, communicatively, functionally, electronically, electrically) via one or more interfaces.

The processor 602, the memory 604, the controller 606, or the transceiver 608, or various combinations or components thereof may be implemented in hardware (e.g., circuitry). The hardware may include a processor, a digital signal processor (DSP), an application-specific integrated circuit (ASIC), or other programmable logic device, or any combination thereof configured as or otherwise supporting a means for performing the functions described in the present disclosure.

The processor 602 may include an intelligent hardware device (e.g., a general-purpose processor, a DSP, a CPU, an ASIC, an FPGA, or any combination thereof). In some implementations, the processor 602 may be configured to operate the memory 604. In some other implementations, the memory 604 may be integrated into the processor 602. The processor 602 may be configured to execute computer-readable instructions stored in the memory 604 to cause the NE 600 to perform various functions of the present disclosure.

The memory 604 may include volatile or non-volatile memory. The memory 604 may store computer-readable, computer-executable code including instructions when executed by the processor 602 cause the NE 600 to perform various functions described herein. The code may be stored in a non-transitory computer-readable medium such the memory 604 or another type of memory. Computer-readable media includes both non-transitory computer storage media and communication media including any medium that facilitates transfer of a computer program from one place to another. A non-transitory storage medium may be any available medium that may be accessed by a general-purpose or special-purpose computer.

In some implementations, the processor 602 and the memory 604 coupled with the processor 602 may be configured to cause the NE 600 to perform one or more of the functions described herein (e.g., executing, by the processor 602, instructions stored in the memory 604).

For example, the processor 602 may support wireless communication at the NE 600 in accordance with examples as disclosed herein. The NE 600 may be configured to support a means for establishing a PDU session for a UE, wherein the PDU session comprises a UDP flow for a service or an application, receiving a rule of a transport mode associated with the UDP flow, receiving a datagram comprising an unknown identifier and a payload, and handling the payload of the received datagram according to the transport mode of the UDP flow. The operations of 708 may be performed in accordance with examples as described herein. In some implementations, aspects of the operations of 708 may be performed by an NE as described with reference to Figure 6.

The controller 606 may manage input and output signals for the NE 600. The controller 606 may also manage peripherals not integrated into the NE 600. In some implementations, the controller 606 may utilize an operating system such as iOS^{®}, ANDROID^{®}, WINDOWS^{®}, or other operating systems. In some implementations, the controller 606 may be implemented as part of the processor 602.

In some implementations, the NE 600 may include at least one transceiver 608. In some other implementations, the NE 600 may have more than one transceiver 608. The transceiver 608 may represent a wireless transceiver. The transceiver 608 may include one or more receiver chains 610, one or more transmitter chains 612, or a combination thereof.

A receiver chain 610 may be configured to receive signals (e.g., control information, data, packets) over a wireless medium. For example, the receiver chain 610 may include one or more antennas for receive the signal over the air or wireless medium. The receiver chain 610 may include at least one amplifier (e.g., a low-noise amplifier (LNA)) configured to amplify the received signal. The receiver chain 610 may include at least one demodulator configured to demodulate the receive signal and obtain the transmitted data by reversing the modulation technique applied during transmission of the signal. The receiver chain 610 may include at least one decoder for decoding the processing the demodulated signal to receive the transmitted data.

A transmitter chain 612 may be configured to generate and transmit signals (e.g., control information, data, packets). The transmitter chain 612 may include at least one modulator for modulating data onto a carrier signal, preparing the signal for transmission over a wireless medium. The at least one modulator may be configured to support one or more techniques such as amplitude modulation (AM), frequency modulation (FM), or digital modulation schemes like phase-shift keying (PSK) or quadrature amplitude modulation (QAM). The transmitter chain 612 may also include at least one power amplifier configured to amplify the modulated signal to an appropriate power level suitable for transmission over the wireless medium. The transmitter chain 612 may also include one or more antennas for transmitting the amplified signal into the air or wireless medium.

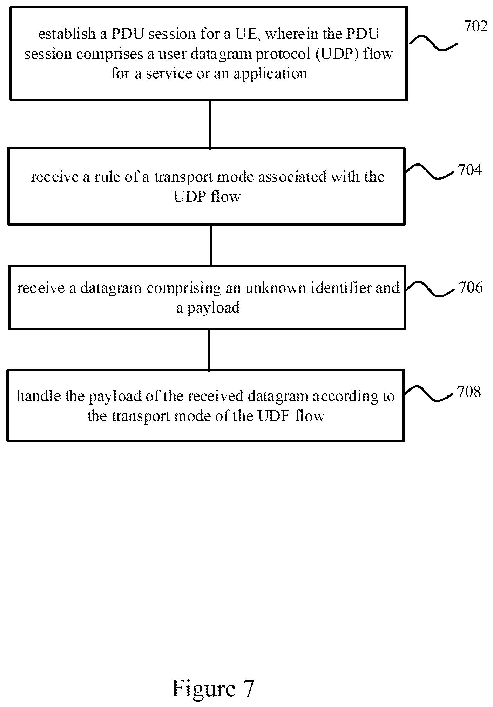

Figure 7 illustrates a flowchart of a method in accordance with aspects of the present disclosure. The operations of the method may be implemented by an NE as described herein. In some implementations, the NE may execute a set of instructions to control the function elements of the NE to perform the described functions.

At 702, the method may include establishing a PDU session for a UE, wherein the PDU session comprises a UDP flow for a service or an application. The operations of 702 may be performed in accordance with examples as described herein. In some implementations, aspects of the operations of 702 may be performed by an NE as described with reference to Figure 6.

At 704, the method may include receiving a rule of a transport mode associated with the UDP flow. The operations of 704 may be performed in accordance with examples as described herein. In some implementations, aspects of the operations of 704 may be performed by an NE as described with reference to Figure 6.

At 706, the method may include receiving a datagram comprising an unknown identifier and a payload. The operations of 706 may be performed in accordance with examples as described herein. In some implementations, aspects of the operations of 706 may be performed by an NE as described with reference to Figure 6.

At 708, the method may include handling the payload of the received datagram according to the transport mode of the UDP flow. The operations of 708 may be performed in accordance with examples as described herein. In some implementations, aspects of the operations of 708 may be performed by an NE as described with reference to Figure 6.

It should be noted that the method described herein describes a possible implementation, and that the operations and the steps may be rearranged or otherwise modified and that other implementations are possible.

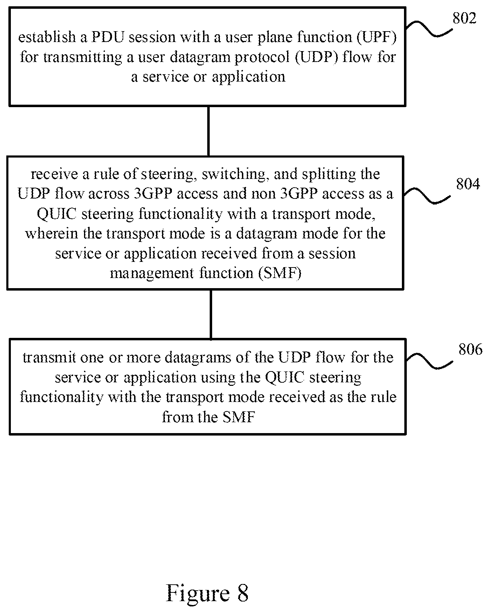

Figure 8 illustrates a flowchart of a method in accordance with aspects of the present disclosure. The operations of the method may be implemented by a UE as described herein. In some implementations, the UE may execute a set of instructions to control the function elements of the UE to perform the described functions.

At 802, the method may include establishing a PDU session with a UPF for transmitting a UDP flow for a service or application. The operations of 802 may be performed in accordance with examples as described herein. In some implementations, aspects of the operations of 802 may be performed by a UE as described with reference to Figure 4.

At 804, the method may include receiving a rule of steering, switching, and splitting the UDP flow across 3GPP access and non 3GPP access as a QUIC steering functionality with a transport mode, wherein the transport mode is a datagram mode for the service or application received from an SMF. The operations of 804 may be performed in accordance with examples as described herein. In some implementations, aspects of the operations of 804 may be performed a UE as described with reference to Figure 4.

At 806, the method may include transmitting one or more datagrams of the UDP flow for the service or application using the QUIC steering functionality with the transport mode received as the rule from the SMF. The operations of 806 may be performed in accordance with examples as described herein. In some implementations, aspects of the operations of 806 may be performed a UE as described with reference to Figure 4.

It should be noted that the method described herein describes a possible implementation, and that the operations and the steps may be rearranged or otherwise modified and that other implementations are possible.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

Further aspects of the invention are provided by the subject matter of the following numbered clauses:
1. A network function for wireless communication, comprising: at least one memory; and at least one processor coupled with the at least one memory and configured to cause the network function to: establish a protocol data unit (PDU) session for a user equipment (UE), wherein the PDU session comprises a user datagram protocol (UDP) flow for a service or an application; receive a rule of a transport mode associated with the UDP flow; receive a datagram comprising an unknown identifier and a payload; and handle the payload of the received datagram according to the transport mode of the UDP flow.
2. The network function of clause 1, wherein the unknown identifier is an unknown context identifier that indicates a format of the payload.
3. The network function of clause 1 or 2, wherein the PDU session is a multiple access (MA) PDU session.
4. The network function of clause 1, 2 or 3 , wherein the UDP flow is a service data flow (SDF) and is steered across 3GPP-access and non-3GPP access as a multipath-enabled QUIC steering functionality.
5. The network function of clause 4, wherein a context identifier is allocated for the transport mode associated with the multipath-enabled QUIC steering functionality of the UDP flow.
6. The network function of any preceding clause, wherein the transport mode is datagram mode 1 or datagram mode 2.
7. The network function of any preceding clause, wherein the network function is a user plane function (UPF) and the least one processor is configured to cause the UPF to receive the rule of the transport mode associated with the UDP flow from a session management function (SMF).
8. The network function of any preceding clause, wherein, to handle the datagram, the at least one processor is configured to cause the UPF to receive the datagram.
9. The network function of any preceding clause, wherein the datagram is a hypertext transport protocol (HTTP) datagram that is used as part of a format of a QUIC datagram frame.
10. The network function of any preceding clause, wherein the at least one processor is further configured to cause the network function to: allocate a context identifier to the datagram based on the transport mode; and receive other datagrams of the UDP flow for the service or application having context identifiers that are different than the context identifier allocated to the datagram.
11. A method performed by a network function, the method comprising: establishing a protocol data unit (PDU) session for a user equipment (UE), wherein the PDU session comprises a user datagram protocol (UDP) flow for a service or an application; receiving a rule of a transport mode associated with the UDP flow; receiving a datagram comprising an unknown identifier and a payload; and handling the payload of the received datagram according to the transport mode of the UDP flow.
12. The method of clause 11, wherein the unknown identifier is an unknown context identifier that indicates a format of the payload.
13. The method of clause 11 or 12, wherein the UDP flow is a service data flow (SDF) and is steered across 3GPP-access and non-3GPP access as a multipath-enabled QUIC steering functionality.
14. The method of clause 11, 12 or 13, wherein the datagram is a hypertext transport protocol (HTTP) datagram that is used as part of a format of a QUIC datagram frame.
15. The method of any of clauses 11 to 14, further comprising: allocating a context identifier to the datagram based on the transport mode; and receiving other datagrams of the UDP flow for the service or application having context identifiers that are different than the context identifier allocated to the datagram.
16. A user equipment (UE) for wireless communication, comprising: at least one memory; and at least one processor coupled with the at least one memory and configured to cause the UE to: establish a packet data unit (PDU) session with a user plane function (UPF) for transmitting a user datagram protocol (UDP) flow for a service or application; receive a rule of steering, switching, and splitting the UDP flow across 3GPP access and non 3GPP access as a QUIC steering functionality with a transport mode, wherein the transport mode is a datagram mode for the service or application received from a session management function (SMF); and transmit one or more datagrams of the UDP flow for the service or application using the QUIC steering functionality with the transport mode received as the rule from the SMF.
17. The UE of clause 16, wherein the PDU session is a multiple access (MA) PDU session where traffic is steered across 3GPP-access and non-3GPP access as a multipath-enabled QUIC steering functionality.
18. The UE of clause 16 or 17, wherein the one or more datagrams include unknown context IDs and wherein the at least one processor is further configured to cause the UE to: handle payloads of the one or more datagrams regardless of the unknown context IDs.
19. A processor for wireless communication, comprising: at least one controller coupled with at least one memory and configured to cause the processor to: establish a packet data unit (PDU) session with a user plane function (UPF) for transmitting a user datagram protocol (UDP) flow for a service or application; receive a rule of steering, switching, and splitting the UDP flow across 3GPP access and non 3GPP access as a QUIC steering functionality with a transport mode, wherein the transport mode is a datagram mode for the service or application received from a session management function (SMF); and transmit the UDP flow for the service or application using the QUIC steering functionality with the transport mode received as the rule from the SMF.
20. The processor of clause 19, wherein the PDU session is a multiple access (MA) PDU session where traffic is steered across 3GPP-access and non-3GPP access as a multipath-enabled QUIC steering functionality.

## Claims

1. A network function for wireless communication, configured to:
establish a protocol data unit, PDU, session comprising a user datagram protocol, UDP, flow;
receive a rule of a transport mode associated with the UDP flow;
receive a datagram comprising an unknown identifier and a payload; and
handle the payload of the received datagram according to the transport mode of the UDP flow.

2. The network function of claim 1, wherein the unknown identifier is an unknown context identifier that indicates a format of the payload.

3. The network function of claim 1 or 2, wherein the PDU session is a multiple access, MA, PDU session.

4. The network function of claim 1, 2 or 3, wherein the UDP flow is a service data flow, SDF, and is steered across 3GPP-access and non-3GPP access as a multipath-enabled QUIC steering functionality.

5. The network function of claim 4, wherein a context identifier is allocated for the transport mode associated with the multipath-enabled QUIC steering functionality of the UDP flow.

6. The network function of any preceding claim, wherein the transport mode is datagram mode 1 or datagram mode 2.

7. The network function of any preceding claim, wherein the network function is a user plane function, UPF, configured to receive the rule of the transport mode associated with the UDP flow from a session management function, SMF.

8. The network function of any preceding claim, wherein the datagram is a hypertext transport protocol, HTTP, datagram that is used as part of a format of a QUIC datagram frame.

9. The network function of any preceding claim, further configured to:
allocate a context identifier to the datagram based on the transport mode; and
receive other datagrams of the UDP flow having context identifiers that are different than the context identifier allocated to the datagram.

10. A method performed by a network function, the method comprising:
establishing a protocol data unit, PDU, session comprising a user datagram protocol, UDP, flow;
receiving a rule of a transport mode associated with the UDP flow;
receiving a datagram comprising an unknown identifier and a payload; and
handling the payload of the received datagram according to the transport mode of the UDP flow.

11. A user equipment, UE, for wireless communication, comprising:
at least one memory; and
at least one processor coupled with the at least one memory and configured to cause the UE to:
establish a packet data unit, PDU, session with a user plane function, UPF, for transmitting a user datagram protocol, UDP, flow;
receive a rule of steering, switching, and splitting the UDP flow across 3GPP access and non 3GPP access as a QUIC steering functionality with a transport mode, wherein the transport mode is a datagram mode; and
transmit one or more datagrams of the UDP flow using the QUIC steering functionality with the transport mode.

12. The UE of claim 11, wherein the PDU session is a multiple access, MA, PDU session where traffic is steered across 3GPP-access and non-3GPP access as a multipath-enabled QUIC steering functionality.

13. The UE of claim 11 or 12, wherein the one or more datagrams include unknown context identifiers and wherein the at least one processor is further configured to cause the UE to:
handle payloads of the one or more datagrams regardless of the unknown context identifiers.

14. A method for wireless communication by a user equipment, UE, the method comprising:
establishing a packet data unit, PDU, session with a user plane function, UPF, for transmitting a user datagram protocol, UDP, flow;
receiving a rule of steering, switching, and splitting the UDP flow across 3GPP access and non 3GPP access as a QUIC steering functionality with a transport mode, wherein the transport mode is a datagram mode; and
transmitting one or more datagrams of the UDP flow using the QUIC steering functionality with the transport mode.

15. The method of claim 14, wherein the PDU session is a multiple access, MA, PDU session where traffic is steered across 3GPP-access and non-3GPP access as a multipath-enabled QUIC steering functionality.
